(19) **Europäisches Patentamt**

**European Patent Office**

**Office européen des brevets**

(11) **EP 0 485 165 B1**

(12) # EUROPEAN PATENT SPECIFICATION

(45) Date of publication and mention
of the grant of the patent:
**23.07.1997 Bulletin 1997/30**

(51) Int Cl.⁶: **H04N 9/78**

(21) Application number: **91310214.1**

(22) Date of filing: **05.11.1991**

(54) **Luminance/chrominance separating apparatus**

Luminanz-/Chrominanz-Trennschaltung

Circuit de séparation luminance/chrominance

(84) Designated Contracting States:
**DE FR GB**

(30) Priority: **05.11.1990 JP 299550/90**
**29.07.1991 JP 188808/91**

(43) Date of publication of application:
**13.05.1992 Bulletin 1992/20**

(73) Proprietors:
- **KABUSHIKI KAISHA TOSHIBA**
  **Kawasaki-shi, Kanagawa-ken 210 (JP)**
- **TOSHIBA AVE CO., LTD**
  **Minato-ku, Tokyo 105 (JP)**

(72) Inventors:
- **Mawatari, Masahiko, c/o Intellectual Pty Division**
  **Minato-ku, Tokyo (JP)**
- **Koga, Takashi, c/o Intellectual Pty Division**
  **Minato-ku, Tokyo (JP)**

- **Tanaka, Seiichi, c/o Intellectual Pty Division**
  **Minato-ku, Tokyo (JP)**
- **Matsuda, Naoki, c/o Intellectual Pty Division**
  **Minato-ku, Tokyo (JP)**
- **Sumiyoshi, Masatoshi, c/o Intellectual Pty Div.**
  **Minato-ku, Tokyo (JP)**

(74) Representative: **Muir, Ian R. et al**
**Haseltine Lake & Co.,**
**Imperial House,**
**15-19 Kingsway**
**London WC2B 6UD (GB)**

(56) References cited:
**EP-A- 0 364 967          EP-A- 0 368 314**

- **PATENT ABSTRACTS OF JAPAN vol. 12, no. 167**
  **(E-610)(3014) 19 May 1988**

## Description

The present invention relates generally to a luminance/chrominance separating apparatus, i.e., an apparatus for separating luminance and chrominance components in a composite video signal, which is suited to be used in television sets, video tape recorders and the like.

European Patent Application EP-A-0368314 shows one prior art luminance/chrominance separating apparatus for separating a luminance component and a chrominance component from a composite colour video signal, comprising:

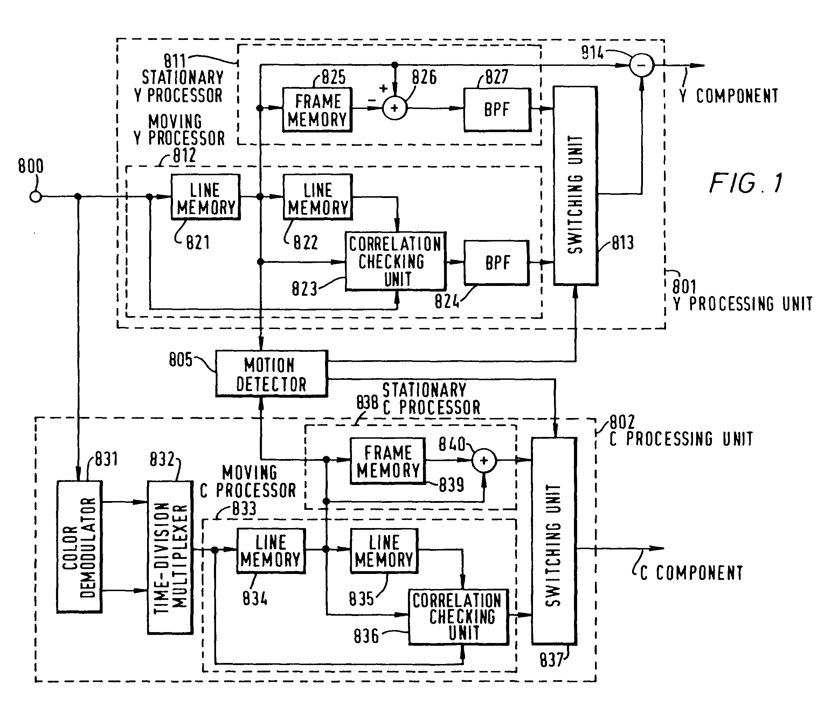

first separation means for separating a stationary chrominance component;
second separating means for separating a moving chrominance component;
first subtraction means for subtracting the stationary chrominance component from the composite video signal so as to separate a stationary luminance component;
second subtraction means for subtracting the moving chrominance component from the composite video signal so as to separate a moving luminance component;
first mixing means responsive to the motion signal for mixing the stationary chrominance component and the moving chrominance component with each other so as to output the chrominance component; and
second mixing means responsive to the motion signal for mixing the stationary luminance component and the moving luminance component with each other to output the luminance component. This arrangement has similar components to the movement adoption type YC separating circuit shown in Fig. 1 described below.

FIGURE 1 shows a further prior art luminance/chrominance separating apparatus (hereinafter referred to as "Y/C" separator) which is conventionally used in a video signal processing circuit of such television receivers. The Y/C separator is implemented by a well-known three-dimensional Y/C separation technique using components of the video signal in the horizontal axis, the vertical axis and the time axis.

In FIGURE 1, a composite video signal is input to an input terminal 800 and then supplied to a luminance component separator (hereinafter referred to as Y processing unit) 801 and a chrominance component separator (hereinafter referred to as C processing unit) 802.

The Y processing unit 801 includes a stationary Y processor 811 and a moving Y processor 812, which are disclosed in the "ITEJ Technical Report", Vol. 12, No. 51, pp. 1-6 (Nov., 1988). These processors 811 and 812 are suited for separating the Y component in stationary pictures and moving pictures, respectively. The stationary and moving Y components are selectively applied to a subtractor 814 through a switching unit 813.

The moving Y processor 812 comprises a line memory 821, a line memory 822, a correlation checking unit 823 and a band pass filter (band pass filter is hereinafter referred to as BPF) 824. The composite video signal on the input terminal 800 is applied to the line memory 821 wherein the composite video signal is delayed by 1 horizontal scanning period (hereinafter referred to as "1H" period). An output from the line memory 821 is supplied to the line memory 822 wherein the composite video signal is further delayed by the 1H period. The composite signals from the input terminal 800, the line memory 821 and the line memory 822 are applied to the correlation checking unit 823. The correlation checking unit 823 checks correlations among the three composite video signals so that an output therefrom represents uncorrelated signal components among the three composite video signals.

The uncorrelated signal components are applied to the BPF 824. The BPF 824 has a pass characteristic for passing a color subcarrier signal. Thus the uncorrelated signal components output from the BPF 824 are mainly chrominance components (hereinafter referred to as C components). The C components are applied to the switching unit 813.

The stationary Y processor 811 comprises a frame memory 825, a subtractor 826 and a BPF 827. The composite video signal from the line memory 821 of the moving Y processor 812 is also applied to the frame memory 825 and the subtractor 826. In the frame memory 825, the composite video signal is delayed by 1 frame period. In the subtractor 826, the composite video signals from the line memory 821 and the frame memory 825 are subtracted other. Thus an output from the subtractor 826 also represents uncorrelated components between the two composite video signals.

The uncorrelated signal components from the subtractor 826 are are applied to the BPF 827. The BPF 827 also has a pass characteristic for passing a color subcarrier signal. The signal extracted by the BPF 827 is applied to the switching unit 813.

The switching unit 813 selectively outputs either the signal from the stationary Y processor 811 or the signal from the moving Y processor 812 under the control of a motion detector 805. The motion detector 805 outputs a signal representing motion in a picture in the composite video signal, as disclosed in the U.S. Patent No. 4,626,891. When there motions occurs in the picture, a signal, e.g., a logic level of "1" representing motion causes the switching unit 813 to output the signal from the stationary Y processor 811. When no motion occurs in the picture, another signal, e.g., a logic level of "0" representing no motion causes the switching unit 813 to output the signal from the moving Y processor 812.

The selected signal from the switching unit 813 is , applied to the subtractor 814 wherein it is subtracted from the composite video signal from the line memory 821.

The signal from the switching unit 813 represents the C component, as described above. Thus, a luminance component (hereinafter referred to as Y component) is obtained.

The C processor 802 includes a color demodulator 831, a time-division multiplexer 832, a stationary C processor 838, a moving C processor 833 and a switching unit 837, as also disclosed in the above-mentioned "ITEJ Technical Report". These processors 838 and 833 are suited for separating the C component in stationary pictures and moving pictures, respectively. The stationary and moving C components are selectively output through the switching unit 837.

The composite video signal on the input terminal 800 is also applied to the color demodulator 831 which demodulates I and Q signals as baseband signals of the chrominance components from the composite video signal. However, the outputs of the color demodulator 831 contain high frequency components of the Y components. The I and Q signals are multiplexed in a time-sequential form by the time division multiplex circuit 832 and then applied to the moving C processor 833.

The moving C processor 833 comprises a line memory 834, a line memory 835 and a correlation checking unit 836. The multiplexed signal output from the time division multiplex circuit 832 is applied to the line memory 834 wherein the multiplexed signal is delayed by 1H period. An output from the line memory 834 is supplied to the line memory 835 wherein the multiplexed signal is further delayed by the 1H period. The multiplexed signals from the time division multiplex circuit 832, the line memory 834 and the line memory 835 are applied to the correlation checking unit 836.

The correlation checking unit 836 checks correlations among the three multiplexed signals so that an output therefrom represents uncorrelated signal components among the three multiplexed signals. The uncorrelated signal components include mainly the I and Q components. The I and Q components are applied to the switching unit 837.

The stationary C processor 838 comprises a frame memory 839 and an adder 840. The multiplexed signal from the line memory 834 of the moving C processor 833 is also applied to the frame memory 839 and the adder 840. In the frame memory 839, the multiplexed signal is delayed by 1 frame period. In the adder 840, the multiplexed signals from the line memory 834 and the frame memory 839 are subtracted from each other. Thus an output from the adder 840 also represents uncorrelated components between the two multiplexed signals. The uncorrelated signal components from the adder 840 is applied to the switching unit 837.

The switching unit 837 selectively outputs either the signal from the stationary C processor 838 or the signal from the moving C processor 833 under the control of the motion detector 805. When there motion occurs in the picture, the signal representing the motion causes the switching unit 837 to output the signal from the stationary C processor 838. When no motion occurs in the picture, the signal representing no motion causes the switching unit 837 to output the signal from the moving C processor 833. The selected signal from the switching unit 813 represents the I and Q components, as described above.

In the prior art Y/C separator, the Y component and the C component are separated by both the Y processor 801 and the C processor 802. Each of the processors 811 and 838 uses a frame memory which needs a huge memory capacity and thus is very expensive. Furthermore, the I and Q components obtained by the prior art Y/C separator are not able to couple directly to home VTRs such as VHS type VTRs, 8-mm type VTRs, etc.

The present invention therefore seeks to provide a luminance/chrominance separating apparatus which is able to separate a luminance component and a chrominance component by using a relatively simple circuit.

The present invention also seeks to provide a luminance/chrominance separating apparatus which is able to separate a luminance component and a chrominance component without using excessively large of frame memories.

The present invention further seeks to provide a luminance/chrominance separating apparatus which is able to produce luminance and chrominance components which are able to couple directly to home VTRs

According to the present invention there is provided a luminance/chrominance separating apparatus for separating a luminance component and a chrominance component from a composite colour video signal, comprising:

first separation means for separating a stationary chrominance component;
second separator means for separating a moving chrominance component by detecting a line difference signal between adjacent lines of the composite video signal;
motion detecting means for detecting a motion signal as a frame change between adjacent frames of the composite video signal,
first subtraction means for subtracting the stationary chrominance component from the composite video signal so as to separate a stationary luminance component;
second subtraction means for subtracting the moving chrominance component from the composite video signal so as to separate a moving luminance component;
first mixing means responsive to the motion signal for mixing the stationary chrominance component and the moving chrominance component with each other so as to output the chrominance component; and
second mixing means responsive to the motion signal for mixing the stationary luminance component and the moving luminance component with each other to output the luminance component,

CHARACTERIZED IN THAT:

the first separation means comprises means for demodulating a colour difference signal from the composite video signal with a colour subcarrier signal, means for detecting a frame difference signal between two adjacent frames of the colour difference signal, and means for modulating the frame difference signal with the colour subcarrier signal so as to reproduce the stationary chrominance component.

For a better understanding of the present invention and many of the attendant advantages thereof reference will now be made by way of example to the accompanying drawings, wherein:

FIGURE 1 is a block diagram showing a prior art luminance/chrominance separating apparatus;
FIGURE 2 is a block diagram showing an embodiment of the luminance/chrominance separating apparatus according to the present invention;
FIGURES 3A to 3H are waveform diagrams of signals at various sections in the luminance/chrominance separating apparatus of FIGURE 2;
FIGURE 4 is a block diagram showing details of a non-linear enhancer of FIGURE 2;
FIGURE 5 is a frequency response characteristic of FIR filter 402 of FIGURE 4;
FIGURE 6 is an input-output characteristic of coring unit 409 of FIGURE 4;
FIGURES 7A, 7B and 7C are timing charts for explaining the operation of the non-linear enhancer of FIGURE 4; and
FIGURE 8 is a block diagram showing another embodiment of luminance/chrominance separating apparatus according to the present invention.

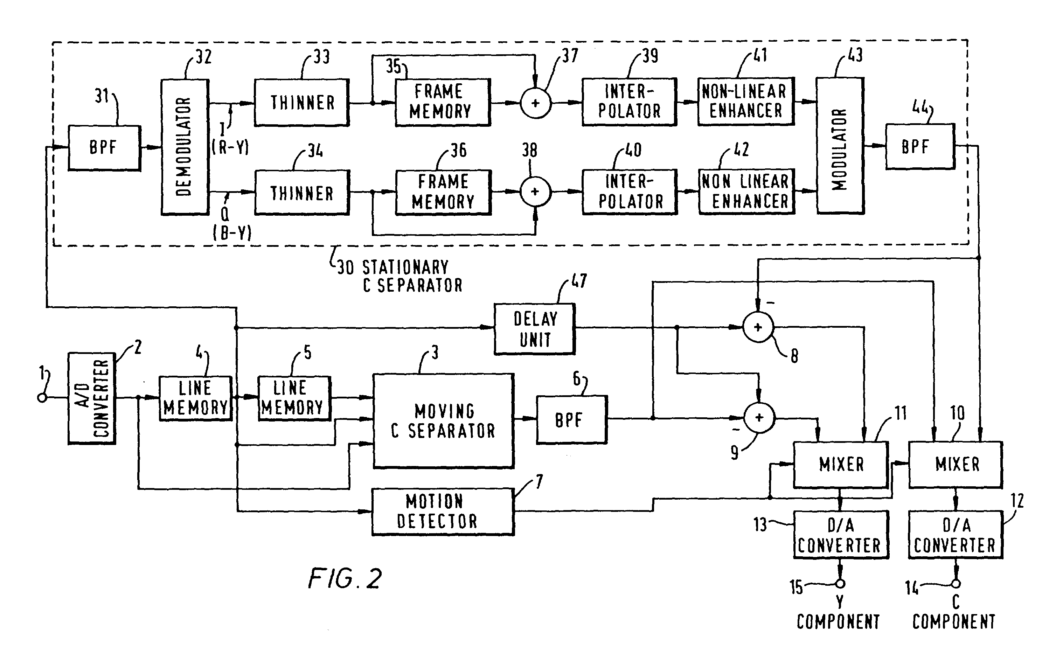

The present invention will be described in detail with reference to the FIGURES 2 through 8.

Referring now to FIGURE 2, an embodiment of the luminance/chrominance separating apparatus (hereinafter also referred to as "Y/C" separator) according to the present invention will be described in detail.

FIGURE 2 shows the embodiment of the Y/C separator. A composite video signal is input to an input terminal 1 and then applied to an analog/digital converter (hereinafter referred to as "A/D" converter) 2. The A/D converter 2 converts the composite video signal from an analog form to a digital form. The digital composite video signal is applied to a moving C separator 3 and a line memory 4 which delays signals by 1H period. The output signal from the line memory 4 is applied to the moving C separator 3, a line memory 5 and a motion detector 7. The output signal from the line memory 4 is further applied to subtractors 8 and 9 through a delay unit 47 for matching the timings of input signals to the subtractors 8 and 9. The output signal from the line memory 5 is applied to the moving C separator 3.

The moving C separator 3 extracts vertical high frequency band components by operating three lines in using the vertical correlation of the three lines. The vertical high frequency band components are applied to a BPF 6. The BPF 6 passes a color subcarrier band signal component. This color subcarrier band signal is the chrominance component at time of the moving picture (here, this signal is called the moving C component). This moving C component is applied to the subtractor 9 and a mixer 10. The subtractor 9 carries out a subtraction between the moving C component and the output signal from the line memory 4. Thus a Y component is output from the subtractor 9. This Y component will be referred to as moving Y component hereinafter. The moving Y component is applied to a mixer 11.

The output signal from the line memory 4 is applied to a stationary C separator 30. In the stationary C separator 30, the signal is applied to a BPF 31. The BPF 31 extracts the color subcarrier band signal component. The color subcarrier band signal is applied to a demodulator 32. The demodulator 32 demodulates I and Q components as baseband signals of the chrominance components from the color subcarrier band signal by carrier signals which are synchronized with the color subcarrier signal with orthogonally related axes, i.e., I and Q axes. The I and Q axes have phases of 123° and 33°, respectively, when a burst signal has the phase of -180°. The I and Q components may contain high frequency band components of the Y component. The I and Q components are applied to thinners 33 and 34, respectively.

Here, the digital composite video signal before demodulation has been sampled at a sampling rate of 4.Fsc clock (wherein Fsc is the color subcarrier frequency), but such higher sampling rate of 4.Fsc is not necessary after the demodulation. This is because the I and Q components have been originally normalized in the bands by 1.5 MHz and 0.5 MHz, respectively, and thus information will not be lost even when they are thinned in the thinners 33 and 34. The thinning rates will be, for instance, about Fsc for the I component and Fsc/3 for the Q component. Further, the demodulations of the I and Q components may be replaced with demodulations of color difference signals "R-Y" and "B-Y" or any two orthogonally related signals synchronized with the color subcarrier frequency. Here the thinners 33 and 34 can be constituted by digital LPFs with cut-off frequencies of 1.5 MHz and 0.5 MHz, respectively.

The output from the thinner 33 is applied to a frame memory 35 and an adder 37. Also the output from the thinner 34 is applied to a frame memory 36 and an adder 38. The adder 37 adds the outputs from the frame memory 35 and the output from the thinner 33. Thus an inter-frame correlation signal of the I components between two adjacent frames is output from the adder 37. Further, an inter-frame correlation signal of the Q components between two adjacent frames is output from the adder 38. These inter-frame correlation signals are applied to interpolators 39 and 40, respectively.

The interpolators 39 and 40 interpolate the inter-frame correlation signals which have been thinned out in the thinners 33 and 34. thus, the outputs of the interpolators 39 and 40 have their sampling clock frequencies restores to the original sampling frequencies. The I and Q components with their original sampling frequencies are applied to non-linear enhancers 41 and 42, respectively. The non-linear enhancers 41 and 42 compensate for waveform deteriorations of the I and Q components, which were caused by the band restrictions at the BPFs 31 and 44. The thus compensated waveform I and Q components are applied to a modulator 43.

The modulator 43 modulates the I and Q components into carrier chrominance components by carriers synchronized with the color subcarrier in two orthogonally related axes. These carrier chrominance components are combined into a single output and then applied to a BPF 44. The BPF 44 restricts the band of the carrier chrominance component so that a stationary C component is obtained from the BPF 44. The stationary C component signal is applied to the mixer 10 and the subtractor 8. The subtractor 8 subtracts the stationary C component from the BPF 44 from the output signal from the line memory 4. Thus a stationary Y component is obtained from the subtractor 8. The stationary Y component is applied to the mixer 11 together with the moving Y component from the subtractor 9, as described above.

In the mixer 10, the stationary C component from the BPF 44 and the moving C component from the BPF 6 are mixed together in response to a mixing ratio corresponding to a motion detecting signal from the motion detector 7. The motion detector 7 detects any difference between two adjacent frames. This difference represents the motion of a picture in the digital composite video signal from the A/D converter 2. The difference representing the motion is applied to the mixer 10 as the motion detecting signal. The mixer 11 also mixes the stationary and moving Y components from the subtractors 8 and 9 together in response to the mixing ratio. Thus, the mixers 10 and 11 output motion adaptive C and Y components, respectively.

These motion adaptive C and Y components are applied to digital/analog converters (hereinafter referred to as D/A converters) 12 and 13, respectively. These D/A converters 12 and 13 convert the motion adaptive C and Y components from the digital form to the original analog form. Thus, at the output terminal 14 of the D/A converter 12, the separated motion adaptive C component in the analog form is obtained. Also, at the output terminal 15 of the D/A converter 13, the separated motion adaptive Y component in the analog form is obtained.

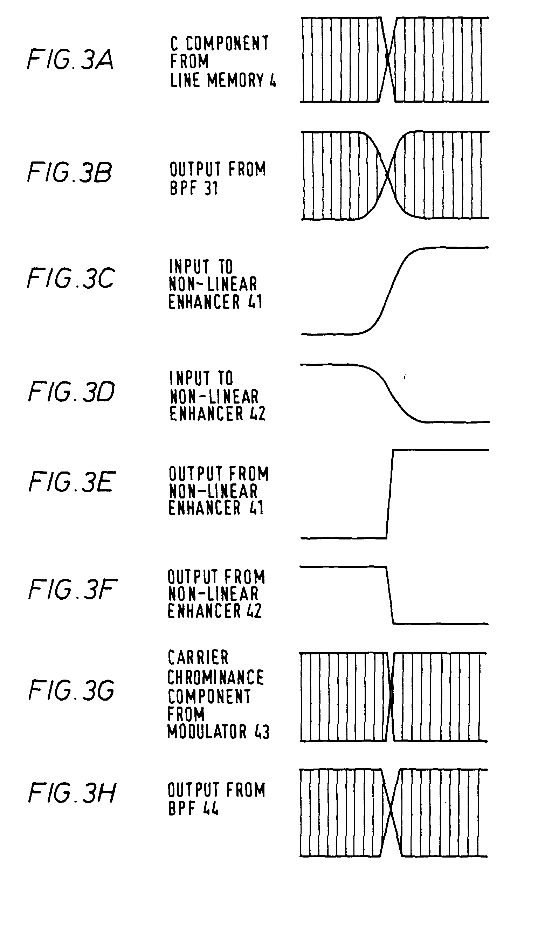

Referring now to FIGURES 3A to 3H, operation of the non-linear enhancers 41 and 42 will be described in detail. FIGURES 3A to 3H show signal waveforms at various parts of the Y/C separator, as shown in FIGURE 2.

FIGURE 3A shows the waveform of the C component output from the line memory 4. FIGURE 3B shows the waveform of the output signal from the BPF 31. The envelope of the waveform shown in FIGURE 3B is rounded off as a result of the band restriction caused in the BPF 31. FIGURES 3C and 3D show the waveforms of the input signals to the non-linear enhancers 41 and 42, i.e., the I and Q components with their original sampling frequencies from the interpolations in the interpolators 39 and 40. These signals have been obtained by the demodulation from the signal shown in FIGURE 3B in the demodulator 32 at the orthogonally related I and Q axes. FIGURES 3E and 3F show the waveforms of the output signals from the non-linear enhancers 41 and 42. These waveforms have been compensated for the rounding of the envelopes in the signals as shown in FIGURES 3C and 3D, according to compensations carried out in the non-linear enhancers 41 and 42, as described in detail later. FIGURE 3G shows the waveform of the carrier chrominance component output from the modulator 43. FIGURE 3H shows the waveform of the output of the BPF 44.

The characteristics of the non-linear enhancers 41 and 42 are so selected that envelopes of the waveforms shown in FIGURES 3A and 3H will so far as practicable agree with each other. Thus, the stationary C component is accurately subtracted from the digital composite video signal from the line memory 4 in the subtractor 8, minimizing the residual color components in the stationary Y component.

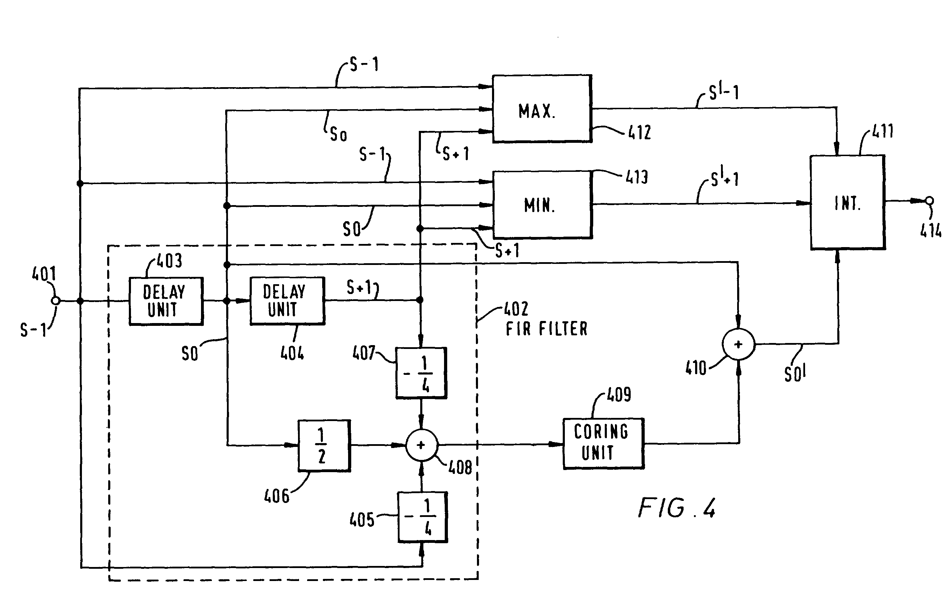

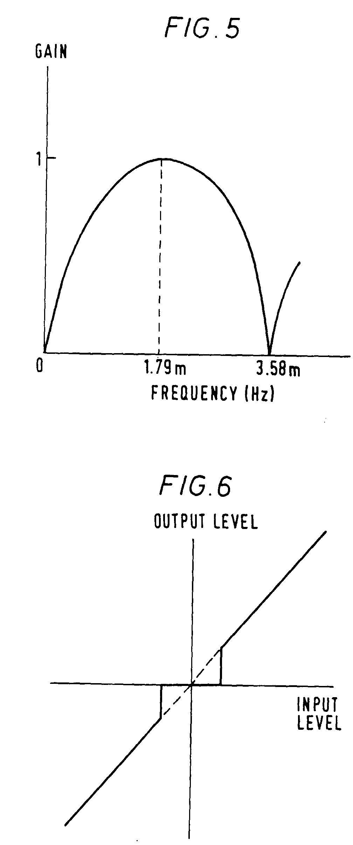

Referring now to FIGURES 4 through 7, an illustrative embodiment of the non-linear enhancers 41 and 42 will be described in detail below. FIGURE 4 showns the constrcution used for the non-linear enhancers 41 and 42. FIGURES 5, 6 and 7 show graphs for explaining the operation of the non-linear enhancer of FIGURE 4.

In FIGURE 4, a signal S-1 to be compensated is applied to an input terminal 401. The signal S-1 is then applied to an FIR (Finite Impulse Response) filter 402, which is comprised of two delay units 403 and 404, three coefficient units 405, 406 and 407 and an adder 408.

In the FIR filter 402, the signal S-1 is applied to the first delay unit 403 wherein the signal S-1 is delayed for a prescribed period. A delayed signal S0 from the first delay unit 403 is further applied to the second delay unit 404 wherein the signal S0 is again delayed for the prescribed period. Thus, a delayed signal S+1 is obtained from the second delay unit 404.

Further, the signal S-1 on the input terminal 401 is applied to the first coefficient unit 405 wherein the signal S-1 is multiplied by "-1/4". The delayed signal S0 from the first delay unit 403 is applied to the second coefficient unit 406 wherein the signal S0 is multiplied by "1/2". The delayed signal S+1 from the second delay unit 404 is applied to the third coefficient unit 407 wherein the signal S+1 is multiplied by "-1/4". These three multiplied signals from the first, second and third coefficient units 405, 406 and 407 are added with each other in the adder 408. The output of the adder 408, i.e., the output from the FIR filter 402, is then applied to a coring unit 409. The coring unit 409 has the input-output characteristic as shown in FIGURE 6. That is, the gain of the coring unit 409 is suppressed to "0" within a predetermined region of input values near "zero". Thus the coring unit 409 is able to avoid troubles caused by instability of the input signal, such as noise.

Here it is assumed that the delay time of the delay units 403 and 404 is 280 nsec, so that the FIR filter 402 has a frequency response characteristic as shown in FIGURE 5. The frequency response has the peak gain "1" at the frequency of 1.79 MHz, as shown in FIGURE 5. The output of the FIR filter 402 thus having the frequency response characteristic is applied to an adder 410 via the coring unit 409 and then added with the signal S0 from the first delay unit 403 of the FIR unit 402 in the adder 410.

As a result of the addition in the adder 410, the input of the non-linear enhancers 41 and 42, i.e., the signal S-1 is enhanced so that the gain "1" is obtained at a DC region (the frequency of 0) and at the frequency of 3.58 MHz, while a gain "2" is obtained at the frequency of 1.79 MHz. This enhanced signal S0' from the adder 410 is applied to an intermediate value unit (hereinafter referred to as INT) 411.

The signals S-1, S0 and S+1 from the input terminal 401, the first delay unit 403 and the second delay unit 404 are applied to a maximum value unit (hereinafter referred to as MAX) 412 and a minimum value unit (hereinafter referred to as MIN) 413. The MAX 412 takes up the maximum value S'+1 among the values of the signals S-1, S0 and S+1. While the MIN 413 takes up the minimum value S'-1 among values of the signals S-1, S0 and S+1. The maximum value and the minimum value are applied to the INT 411 together with the enhanced signal S0' from the adder 410. The INT 411 takes up the intermediate value among the values S'-1, S'+1 and S0'. The intermediate value taken up from the INT 411 is output through an output terminal 414.

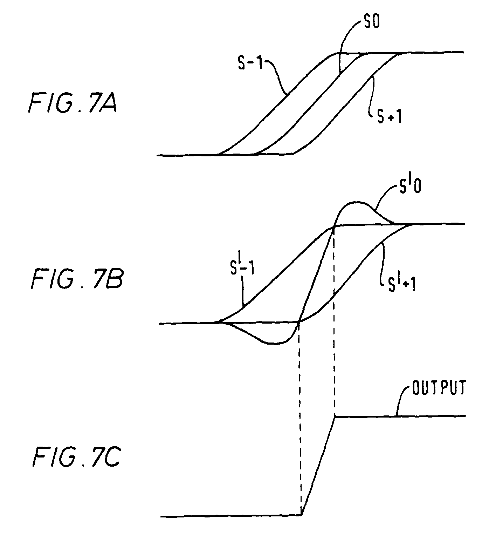

Referring now to FIGURES 7A, 7B and 7C, the operations of the units 412, 413 and 411 will be described. As shown in FIGURES 7A and 7B, in the step response, the waveforms of the signals S-1 and S'-1 are equal to each other. The waveforms of the signals S+1 and S'+1 are also equal to each other. On the other hand, the signal S0' is enhanced at the center frequency of 1.79 MHz in comparaison with the signal S0. Therefore, the output from the INT 411 will become the signal with the compensated waveform as shown in FIGURE 7C from the signal S0 with the rounded waveform as shown in FIGURE 7A.

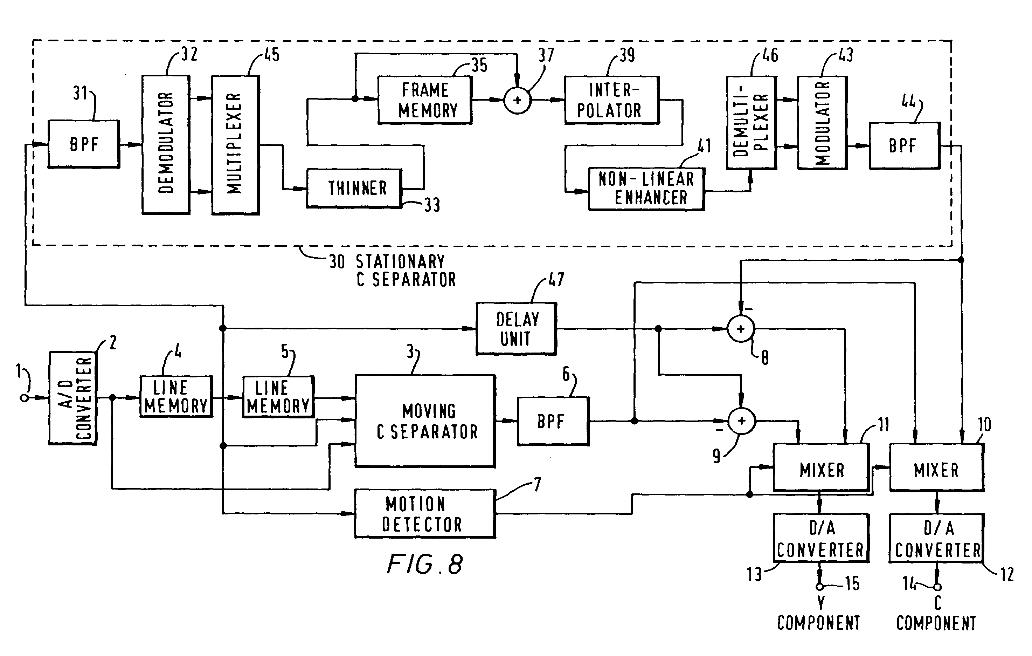

Referring now to FIGURE 8, another embodiment of the present invention will be described below in brief. In FIGURE 8, parts common to those in FIGURE 2 are assigned with the same letters or symbols. A remarkable difference betwenn FIGURE 8 and FIGURE 2 is that two color difference signals from the demodulation circuit 32 are consolidated into one system by multiplexing the signals in the time sequential form by using a multiplexer 45. The output from the multiplexer 45 is applied to the thinner 33. Further, the output from the non-linear enhancer 41 is applied to a demultiplexer 46 wherein the two color difference signals are separated. These separated two color difference signals are applied to the modulator 43. That is, the multiplexer 45 and the demultiplexer 46 are provided for unifying the processings of the I and Q components. According to the construction as shown in FIGURE 8, the clock rate for processing the multiplexed signal is twice that of the embodiment of FIGURE 2. However, the embodiment of FIGURE 8 is able advantageously to reduce the total bit size of the frame memory.

In the embodiments of FIGURES 2 and 8, the demodulator 32 demodulates the I and Q components by using the carrier signals which are synchronized with the color subcarrier signal with the I and Q axes. However, the demodulator 32 can be modified to demodulate color difference signals, "R-Y" component and "B-Y" component. To this end, the demodulator 32 demodulates the "R-Y" and "B-Y" components by carrier signals which are also synchronized with the color subcarrier signals with orthogonally related axes, i.e., "R-Y" and "B-Y" axes. The "R-Y" and "B-Y" axes have phases of 90° and 0°, respectively, when the burst signal has the phase of -180°.

In the Y/C separator as described above, only the stationary C component and the moving C component are separated, while the stationary Y component and the moving Y component are obtained by subtractions between the composite video signal and the stationary C component and the moving C component, respectively. Therefore, the Y/C separator is significantly reduced in size and also in cost. Particularly, it is very economical that the amount of frame memories and line memories is greatly reduced.

Here the effect in cost will be analysed for frame memories which occupy a larger percent of cost in such Y/C separators. Here it is assumed that the sampling frequency for the Y component is 4.Fsc (approximately 14.3 MHz), the sampling frequency for baseband color signal is Fsc (approximately 3.58 MHz), the quantization bits are 8 bits, the number of sampling units for Y component and the number of sampling units for C component in the horizontal scanning period are 910 and 227.5, respectively and the number of lines is 525.

In the known Fig. 1 Y/C separator the number of bits required for the frame memories is given as follows:

Y processor; 8 x 910 x 525 = 3.822 (M bits)

C processor; 8 x 227.5 x 525 = 1.911 (M bits)

Thus the known Y/C separator requires 5.733 M bits in total for the frame memories. If this requirement is covered by a 1 M bit memory chip, at least six chips are required.

On the other hand, in case of the present invention, only the C processor needs the frame memories as follows:

$$8 \times 227.5 \times 525 = 1.911 \text{ (M bits)}$$

This requirement is satisfied with only two M bit memory chips.

Further, as can be seen from the embodiments of FIGURES 2 and 8, the present invention provides the modulated chrominance components in simple construction so that the Y/C separator can be coupled directly to a home VTR.

As described above, the present invention can provide an extremely preferable Y/C separator.

While there have been illustrated and described what are at present considered to be preferred embodiments of the present invention, it will be understood by those skilled in the art that various changes and modifications may be made, and equivalents may be substituted for elements thereof without departing from the true scope of the present invention. In addition, many modifications may be made to adapt a particular situation or material to the teaching of the present invention without departing from the central scope thereof. Therefore, it is intended that the present invention not be limited to the particular embodiments disclosed as the best mode contemplated for carrying out the present invention, but that the present invention include all embodiments falling within the scope of the appended claims.

**Claims**

1. A luminance/chrominance separating apparatus for separating a luminance component and a chrominance component from a composite colour video signal, comprising:

   first separation means (30) for separating a stationary chrominance component;
   second separator means (3, 4, 5) for separating a moving chrominance component by detecting a line difference signal between adjacent lines of the composite video signal;
   motion detecting means (7) for detecting a motion signal as a frame change between adjacent frames of the composite video signal,
   first subtraction means (8) for subtracting the stationary chrominance component from the composite video signal so as to separate a stationary luminance component;
   second subtraction means (9) for subtracting the moving chrominance component from the composite video signal so as to separate a moving luminance component;
   first mixing means (10) responsive to the motion signal for mixing the stationary chrominance component and the moving chrominance component with each other so as to output the chrominance component; and
   second mixing means (11) responsive to the motion signal for mixing the stationary luminance component and the moving luminance component with each other to output the luminance component,

   CHARACTERIZED IN THAT:
   the first separation means (30) comprises means (32) for demodulating a colour difference signal from the composite video signal with a colour subcarrier signal, means (35/36, 37/38) for detecting a frame difference signal between two adjacent frames of the colour difference signal, and means (43) for modulating the frame difference signal with the colour subcarrier signal so as to reproduce the stationary chrominance component.

2. The luminance/chrominance separating apparatus as claimed in claim 1, wherein the first separation means (30) further includes means (33/34) for thinning the colour difference signal, means (39/40) for interpolating the frame difference signal and means (41/42) for compensating a rounded envelope of the interpolated frame difference signal.

3. The luminance/chrominance separating apparatus as claimed in claim 1, wherein the demodulating means includes a demodulator (32) for demodulating a pair of colour difference signals with orthogonally different phases, the detecting means includes a pair of detectors (35/36, 37/38) for detecting a pair of frame difference signals from the pair of color difference signals, and the modulating means (43) includes a multiplexer for multiplexing the pair of frame difference signals so as to reproduce the stationary chrominance component.

4. The luminance/chrominance separating apparatus as claimed in claim 3, wherein the first separation means (30) further includes a pair of means (33, 34) for thinning the pair of color difference signals, a pair of means (39, 40) for interpolating the pair of frame difference signals and a pair of means (41, 42) for compensating rounded envelopes of the pair of interpolated frame difference signals.

5. The luminance/chrominance separating apparatus as claimed in claim 1, wherein the demodulating means (32) includes a demodulator for demodulating a pair of color difference signals with orthogonally different phases, the first separation means (30) further includes a first multiplexer (45) for multiplexing the pair of the color difference signals and a demultiplexer (46) for demultiplexing the frame difference signal into a pair of signals with the orthogonally different phases, and the modulating means (43) includes a second multiplexer for multiplexing the pair of frame difference signals so as to reproduce the stationary chrominance component.

6. The luminance/chrominance separating apparatus as claimed in claim 5, wherein the first separation means (30) further includes means (33) for thinning the multiplexed color difference signal, means (39) for interpolating the frame difference signal and means (41) for compensating a rounded envelope of the interpolated frame difference signal.

7. The luminance/chrominance separating apparatus as claimed in claim 1, further comprising means (47) for delaying the composite video signal supplied to the first and second subtracting means (8, 9).

8. The luminance/chrominance separating apparatus as claimed in claim 3 or claim 5, wherein the demodulator (32) and the demodulator (43) operate with the color subcarrier signal with the I and Q axis components.

9. The luminance/chrominance separating apparatus as claimed in claim 3 or claim 5, wherein the demodulator (32) and the demodulator (43) operate with the color subcarrier signal with the R-Y and B-Y axis components.

10. The luminance/chrominance separating apparatus as claimed in either claim 8 or claim 9 when appended to claim 3, wherein the pair of detectors includes a pair of frame memories (35, 36) which store the color difference signals at sampling frequencies with the same frequency the color subcarrier signal and one-third of the frequency of the color subcarrier signal, respectively.

**Revendications**

1. Un dispositif de séparation luminance/chrominance permettant de séparer une composante de luminance et une composante de chrominance d'un signal vidéo couleur composite, comprenant :

   de premiers moyens de séparation (30) pour séparer une composante de chrominance fixe,

   de seconds moyens de séparation (3, 4, 5) pour séparer une composante de chrominance mobile en détectant un signal de différence de ligne entre des lignes adjacentes du signal vidéo composite ;

des moyens de détection de déplacement (7) pour détecter un signal de déplacement sous la forme d'un changement de trame entre des trames adjacentes du signal vidéo composite,

de premiers moyens de soustraction (8) pour soustraire, du signal vidéo composite, la composante de chrominance fixe de manière ainsi à séparer une composante de luminance fixe ;

de seconds moyens de soustraction (9) pour soustraire, du signal vidéo composite, la composante de chrominance mobile de manière ainsi à séparer une composante de luminance mobile ;

de premiers moyens de mélange (10) répondant au signal de déplacement pour mélanger la composante de chrominance fixe et la composante de chrominance mobile l'une avec l'autre de manière ainsi à délivrer la composante de chrominance ; et

de seconds moyens de mélange (11) répondant au signal de déplacement pour mélanger la composante de luminance fixe et la composante de luminance mobile l'une avec l'autre de manière ainsi à délivrer la composante de luminance,

CARACTERISE EN CE QUE :
les premiers moyens de séparation (30) comprennent des moyens (32) pour démoduler un signal de différence de couleur provenant du signal vidéo composite avec un signal de sous-porteuse couleur, des moyens (35/36, 37/38) pour détecter un signal de différence de trame entre deux trames adjacentes du signal de différence de couleur, et des moyens (43) pour moduler le signal de différence de trame avec le signal de sous-porteuse couleur de manière ainsi à reproduire la composante de chrominance fixe.

2. Le dispositif de séparation luminance/chrominance tel que revendiqué à la revendication 1, dans lequel les premiers moyens de séparation (30) comprennent en outre des moyens (33/34) pour amincir le signal de différence couleur, des moyens (39/40) pour interpoler le signal de différence de trame et des moyens (41/42) pour compenser une enveloppe arrondie du signal de différence de trame ainsi interpolée.

3. Le dispositif de préparation luminance/chrominance tel que revendiqué à la revendication 1, dans lequel les moyens de démodulation comprennent un démodulateur (32) pour démoduler une paire de signaux de différence couleur avec des phases différant de manière orthogonale, les moyens de détection comprennent une paire de détecteurs (35/36, 37/38) pour détecter une paire de signaux de différence de trame à partir de la paire de signaux de différence de couleur, et les moyens de modulation (43) comprennent un multiplexeur pour multiplexer la paire de signaux de différence de trame de manière ainsi à reproduire la composante de chrominance fixe.

4. Le dispositif de séparation luminance/chrominance tel que revendiqué à la revendication 3, dans lequel les premiers moyens de séparation (30) comprennent en outre une paire de moyens (33, 34) pour amincir la paire de signaux de différence de couleur, une paire de moyens (39, 40) pour interpoler la paire de signaux de différence de trame et une paire de moyens (41, 42) pour compenser les enveloppes arrondies de la paire de signaux de différence de trame ainsi interpolée.

5. Le dispositif de séparation luminance/chrominance tel que revendiqué à la revendication 1, dans lequel les moyens de démodulation (32) comprennent un démodulateur pour démoduler une paire de signaux de différence de couleur présentant des phases différant de manière orthogonale, les premiers moyens de séparation (30) comprennent en outre un premier multiplexeur (45) pour multiplexer la paire des signaux de différence de couleur et un démultiplexeur (46) pour démultiplexer le signal de différence de trame et donner une paire de signaux présentant les phases différant de manière orthogonale, et les moyens de démodulation (43) comprennent un second multiplexeur pour multiplexer la paire de signaux de différence de trame de manière ainsi à reproduire la composante de chrominance fixe.

6. Le dispositif de séparation luminance/chrominance tel que revendiqué à la revendication 5, dans lequel les premiers moyens de séparation (30) comprennent en outre des moyens (33) pour amincir le signal de différence de couleur multiplexé, des moyens (39) pour interpoler le signal de différence de trame et des moyens (41) pour compenser une enveloppe arrondie du signal de différence de trame ainsi interpolée.

7. Le dispositif de séparation luminance/chrominance tel que revendiqué à la revendication 1, comprenant en outre des moyens (47) pour retarder le signal vidéo composite appliqué aux premiers et seconds moyens de soustraction (8, 9).

8. Le dispositif de séparation luminance/chrominance tel que revendiqué à la revendication 3 ou à la revendication 5, dans lequel le démodulateur (32) et le démodulateur (43) agissent avec le signal de sous-porteuse couleur présentant les composantes d'axes I et Q.

9. Le dispositif de séparation luminance/chrominance tel que revendiqué à la revendication 3 ou à la revendication 5, dans lequel le démodulateur (32) et le démodulateur (43) agissent avec le signal de sous-porteuse couleur présentant les composantes d'axes R-J et B-J.

10. Le dispositif de séparation luminance/chrominance tel que revendiqué soit à la revendication 8 soit à la revendication 9 dans leur dépendance de la revendication 3, dans lequel la paire de détecteurs comprend une paire de mémoire de trame (35, 36) qui stocke les signaux de différence de couleur à des fréquences d'échantillonnage présentant respectivement la même fréquence que le signal de sous-porteuse couleur et un tiers de la fréquence de sous-porteuse couleur.

**Patentansprüche**

1. Luminanz/Chrominanz-Abtrenneinrichtung zum Abtrennen der Luminanzkomponente und der Chrominanzkomponente aus einem zusammengesetzten Farbvideosignal, umfassend:

   eine erste Abtrennvorrichtung (30) zum Abtrennen einer stationären Chrominanzkomponente;
   zweite Abtrennvorrichtungen (3, 4, 5) zum Abtrennen einer bewegten Chrominanzkomponente durch das Erfassen eines Zeilendifferenzsignals zwischen benachbarten Zeilen des zusammengesetzten Videosignals;
   eine Bewegungserkennungsvorrichtung (7) zum Erkennen eines Bewegungssignals, wenn das Bild zwischen benachbarten Bildern des zusammengesetzten Videosignals wechselt;
   eine erste Subtrahiervorrichtung (8) zum Subtrahieren der stationären Chrominanzkomponente vom zusammengesetzten Videosignal, um eine stationäre Luminanzkomponente abzutrennen;
   eine zweite Subtrahiervorrichtung (9) zum Subtrahieren der bewegten Chrominanzkomponente vom zusammengesetzten Videosignal, um eine bewegte Luminanzkomponente abzutrennen;
   eine erste Mischvorrichtung (10), die auf das Bewegungssignal anspricht und die stationäre Chrominanzkomponente und die bewegte Chrominanzkomponente miteinander mischt, um die Chrominanzkomponente auszugeben; und

eine zweite Mischvorrichtung (11), die auf das Bewegungssignal anspricht und die stationäre Luminanzkomponente und die bewegte Luminanzkomponente miteinander mischt, um die Luminanzkomponente auszugeben,

dadurch gekennzeichnet, daß die erste Abtrennvorrichtung (30) eine Einrichtung (32) zum Demodulieren eines Farbdifferenzsignals aus dem zusammengesetzten Videosignal mit einem Farbhilfsträgersignal enthält sowie Vorrichtungen (35/36, 37/38) zum Erkennen eines Bilddifferenzsignals zwischen zwei benachbarten Bildern des Farbdifferenzsignals und eine Vorrichtung (43) zum Modulieren des Bilddifferenzsignals mit dem Farbhilfsträgersignal, um die stationäre Chrominanzkomponente wieder herzustellen.

2. Luminanz/Chrominanz-Abtrenneinrichtung nach Anspruch 1, wobei die erste Abtrennvorrichtung (30) zudem enthält: Vorrichtungen (33/34) zum Beschränken des Frequenzbereichs des Farbdifferenzsignals, Vorrichtungen (39/40) zum Interpolieren des Bilddifferenzsignals und Vorrichtungen (41/42) zum Ausgleichen einer verrundeten Hüllkurve des interpolierten Bilddifferenzsignals.

3. Luminanz/Chrominanz-Abtrenneinrichtung nach Anspruch 1, wobei die Demoduliervorrichtung einen Demodulator (32) zum Demodulieren eines Farbdifferenzsignalpaars mit orthogonal verschiedenen Phasen enthält, und die Erkennungsvorrichtung ein Detektorpaar (35/36, 37/38) umfaßt, um ein Bilddifferenzsignalpaar im Farbdifferenzsignalpaar zu erkennen, und die Moduliervorrichtung (43) einen Multiplexer zum Multiplexen des Bilddifferenzsignalpaars enthält, um die stationäre Chrominanzkomponente wieder herzustellen.

4. Luminanz/Chrominanz-Abtrenneinrichtung nach Anspruch 3, wobei die erste Abtrennvorrichtung (30) zudem ein Paar Vorrichtungen (33, 34) zum Beschränken des Frequenzbereichs des Farbdifferenzsignalpaars enthält, ein Paar Vorrichtungen (39, 40) zum Interpolieren des Bilddifferenzsignalpaars und ein Paar Vorrichtungen (41, 42) zum Ausgleichen der verrundeten Hüllkurven des interpolierten Bilddifferenzsignalpaars.

5. Luminanz/Chrominanz-Abtrenneinrichtung nach Anspruch 1, wobei die Demoduliervorrichtung (32) einen Demodulator zum Demodulieren eines Farbdifferenzsignalpaars mit orthogonal verschiedenen Phasen enthält, und die erste Abtrennvorrichtung (30) ferner einen ersten Multiplexer (45) zum Multiplexen des Farbdifferenzsignalpaars enthält und einen Demultiplexer (46) zum Demultiplexen des Bilddifferenzsignals in ein Signalpaar mit orthogonal verschiedenen Phasen, und die Moduliervorrichtung (43) einen zweiten Multiplexer zum Multiplexen des Bilddifferenzsignalpaars enthält, um die stationäre Chrominanzkomponente wieder herzustellen.

6. Luminanz/Chrominanz-Abtrenneinrichtung nach Anspruch 5, wobei die erste Abtrennvorrichtung (30) ferner eine Vorrichtung (33) zum Beschränken des Frequenzbereichs des gemultiplexten Farbdifferenzsignals enthält, eine Vorrichtung (39) zum Interpolieren des Bilddifferenzsignals und eine Vorrichtung (41) zum Ausgleichen einer verrundeten Hüllkurve des interpolierten Bilddifferenzsignals.

7. Luminanz/Chrominanz-Abtrenneinrichtung nach Anspruch 1, weiterhin umfassend eine Vorrichtung (47) zum Verzögern des zusammengesetzten Videosignals, das den ersten und zweiten Subtrahiervorrichtungen (8, 9) zugeführt wird.

8. Luminanz/Chrominanz-Abtrenneinrichtung nach Anspruch 3 oder 5, wobei der Demodulator (32) und der Demodulator (43) mit dem Farbhilfsträgersignal mit den I- und Q-Achsenkomponenten arbeiten.

9. Luminanz/Chrominanz-Abtrenneinrichtung nach Anspruch 3 oder 5, wobei der Demodulator (32) und der Demodulator (43) mit dem Farbhilfsträgersignal mit den R-Y- und B-Y-Achsenkomponenten arbeiten.

10. Luminanz/Chrominanz-Abtrenneinrichtung nach Anspruch 8 oder nach Anspruch 9 wenn abhängig von Anspruch 3, wobei das Detektorpaar ein Paar Bildspeicher (35, 36) enthält, die die Farbdifferenzsignale mit Abtastfrequenzen speichern, die gleich der Frequenz des Farbhilfsträgersignals bzw. einem Drittel der Frequenz des Farbhilfsträgersignals sind.

FIG.1

EP 0 485 165 B1

FIG.2

EP 0 485 165 B1

FIG.3A    C COMPONENT FROM LINE MEMORY 4

FIG.3B    OUTPUT FROM BPF 31

FIG.3C    INPUT TO NON-LINEAR ENHANCER 41

FIG.3D    INPUT TO NON-LINEAR ENHANCER 42

FIG.3E    OUTPUT FROM NON-LINEAR ENHANCER 41

FIG.3F    OUTPUT FROM NON-LINEAR ENHANCER 42

FIG.3G    CARRIER CHROMINANCE COMPONENT FROM MODULATOR 43

FIG.3H    OUTPUT FROM BPF 44

FIG. 4

FIG.5

FIG.6

FIG.7A

FIG.7B

FIG.7C

FIG.8

EP 0 485 165 B1